# EUROPEAN PATENT SPECIFICATION

(11) **EP 1 928 345 B1**
(45) Date of publication and mention of the grant of the patent: **25.05.2011**
(21) Application number: 06805913.8
(22) Date of filing: 27.09.2006
(51) Int. Cl.: A61C 8/00

(54) **Dental Implant**
Zahnimplantat
Implant dentaire

(30) Priority: 27.09.2005 EP 05021047; 01.12.2005 EP 05026271; 01.12.2005 US 741278 P
(43) Date of publication of application: 11.06.2008
(73) Proprietor: Ziterion GmbH, 97215 Uffenheim (DE)
(72) Inventor: KAHDEMANN, Steffen, 97215 Uffenheim (DE)
(74) Representative: Zwicker, Jörk
(86) International application number: PCT/EP2006/009393
(87) International publication number: WO 2007/039206

(56) References cited:
- EP-A1- 0 438 048
- EP-A1- 0 438 048
- EP-A1- 1 269 932
- EP-A1- 1 269 932
- DE-A1- 10 340 059
- DE-A1- 10 340 059
- US-A- 4 468 200
- US-A- 5 316 476
- US-A- 5 316 476
- US-A1- 2005 064 007
- US-B1- 6 343 930
- US-B1- 6 447 295

## Description

The present invention relates in general to the field of implant dentistry, namely to the design of a two-part medicinal device made of biocompatible ceramics, wherein said two-part medicinal device provides a basis for a crown or superstructure, which is easy to handle by a dentist. More precisely, the present invention relates to a two-part medicinal device comprising an implant part and an abutment, wherein the prosthetic connection of both parts is provided by an internal connection, which provides a secure connection between both parts.

### BACKGROUND OF THE INVENTION

In the last decades artificial bone structures have increasingly been used for implantation in order to replace natural bones lost due to, e.g. degeneration, degradation or injury. This implantations have been performed on bones and tooth roots and have afforded good results in the remedy of defects or the recovery of functions thereof. Dental implants are commonly used to support fixed or removable prosthesis of patients when a patient's natural roots have been lost. Therefore, it is essential to provide an adequate foundation onto which a dentist can rebuild a dentition. As more people want to take advantage of more conservative approaches offered by implant dentistry, e.g., using a single implant rather that cutting down adjacent teeth to support a short span bridge to replace a missing tooth, implant dentistry has gained more and more popularity.

For dental implants it is important to be made of a non-corrosive material, which must be compatible with the surrounding tissue and which does not provoke any immunologic reactions. Usually selected metals and/or selected ceramic materials are used for implants. As metallic materials which have mainly been used for preparation of artificial bones or tooth roots, cobalt-chromium alloys, stainless steel, titanium and tantalum are exemplified. On the other hand, as ceramic materials, alumina or materials comprising mainly carbon have recently been employed.

Metallic materials are excellent in mechanical strength, particularly in impact strength, however, they do lack affinity for living tissue. When a metallic implant is used, metal ions are dissolved out of the implant and may be toxic to the bone cells around the implant. In addition, bone formation is abstracted, probably because of the larger thermal conductivity of the metallic implant if compared to a normal root. Among the metallic materials titanium, which is passivated with a thin, inert titanium oxide layer and tantalum have proven to have superior corrosion resistance and hence have been employed as fixed plates for sculls of fractured parts of bones and implants of jawbones.

Ceramic materials on the other hand show a good affinity to bones. Growing bone tissue, in particular osteoblasts can penetrate into fine pores of the ceramic materials, leading to a strong fixation. In addition, there are no adverse reactions between the ceramic material and the tissue. Further, since they are resistant to corrosion or decomposition ceramic materials have excellent durability. However, most ceramic materials possess poor impact strength, and are difficult and expensive to manufacture.

A dental implant usually comprises an implant part, intended to be implanted in the bony tissue of the mandible or of the maxilla, and a post or abutment piece, which can be transfixed onto the implant body, so that it stands up above the implant body in order to be able to accept a dental prosthesis. A so-called one-part dental implant comprises the implant part and the abutment part in one piece, in contrast, a two-part dental implant, as the name implies, is made of two pieces, thus the implant part is separable from the abutment part and is connected to the abutment part through, for example, a screw.

Although the two-part design is more difficult to manufacture, it has the advantage over the one-part design that the implant can be inserted into the bone and that the gingival tissue can be closed over the implant to allow undisturbed ingrowth of bone tissue and implantation into the bone over a course of several month, typically 3 to 6 months. In a second phase the abutment part is attached to the implant part and a crown or superstructure is attached to the abutment part. An implant of this type is shown in US- 4,468,200.

WO 03/045368 A1 discloses a one-part dental implant comprising an anchor part for anchoring the implant in the bone and a mounting part for receiving a prosthetic superstructure. The anchor part and the mounting part are configured in one piece from zirconium oxide-based material. At least sections of the external surface of at least the anchor part are pre-treated using a subtractive removal method or are provided with a coating which supports ossification.

WO 2004/096075 A1 describes a one-part dental implant comprising a base body with a threaded section and a pin for mounting a dental crown, wherein the body base being in one piece. In addition, this one-piece base body is at least largely made from zirconium oxide or a mixture of zirconium oxide and aluminium.

EP 1 570 804 A1 describes a two-part dental implant, which comprises an outer body made of ceramic or metal and an inner body made of metal or ceramic, provided that when the outer body is made of metal the inner body is made of ceramic and when the outer body is made of ceramic the inner body is made of metal.

WO 2005/044133 discloses a two-part dental implant, which consists of a base body comprising a threaded part and a post section, onto which a crown is secured. The base body is divided, so that the post elements surrounding the post section, can be removed from the remaining base body comprising the threaded part.

WO 00/32134 describes a two-part implant which is designed so that the areas intended for bone apposition exhibit a scalloped appearance, including both convex, and concave patterns to follow the naturally occurring bone morphology. Thus, the disclosed implants provide attachment possibilities for both bones and soft tissue, thereby effecting both hard- and soft-tissue preservation.

Currently there are different techniques possible which are primarily used for producing dental implants made of ceramic materials for example: forming of a ceramic body, e.g. by injection moulding or isopressing, or grinding out of a densely sintered like HIP (High Isostatic Pressing) ceramic blank.

Injection moulding has the advantages that a serial production is possible and that almost all designs of a dental implant are possible. However, the design of a prototype injection mould is difficult and/or expensive and therefore the variability of this method, i.e. the number of different implant designs which can be produced economically is quite low. Since in most cases a postproduction is needed, the material is not densely enough sintered at the injection moulding step, leading to defects in the material and, thus, to a high rejection rate.

Grinding out of a densely sintered HIP cylindrical blank has the advantage that it is very precise due to the CAD/CAM-technique and thus a high variability in the design of the dental implant is possible. Since the material is already densely sintered, the rejection rate is very low. However, it is an expensive method and due to the hardness of the material it is difficult to grind indentations into the implant body, such as it is needed, for example, for a conical internal connection. Further, grinding the material leads to so-called mini-cracks (rifts), which might have an influence on the quality and stability of the implant. Thus, with this method it is nearly impossible to provide an internal connection having securing means (antirotation), as well as to provide a screwed joint.

The two-part ceramic dental implant designs known from the prior art suffer among others from the fact that they do not yet provide a design suitable to be produced by an affordable technique known in the art and that no suitable durable connection between the two-parts of the dental implant is provided.

According to an example a dental implant (1) made of biocompatible ceramics is provided, having an outer threaded part (2); a contact region (3) for contacting an abutment (12); an indentation (4a) within the contact region (3) suitable to insert a protrusion (15a) of said abutment (12), wherein the contact surface of said indentation (4a) with said protrusion (15a) is free of threaded parts; and securing means (5) preventing rotation of an engaged abutment (12) in the form of a multifaced protrusion (6) located in said contact region (3).

According to another example a dental implant (1) made of biocompatible ceramics is provided, having an outer threaded part (2); a contact region (3) for contacting an abutment (12), an indentation (4a) within the contact region (3) suitable to insert a protrusion (15a) of said abutment (12); wherein the contact surface of said indentation (4a) with said protrusion (15a) is free of threaded parts; and securing means (5) preventing rotation of an engaged abutment (12) in the form of a multifaced indentation (7) located in said contact region (3).

According to another example a dental implant (1) made of biocompatible ceramics is provided, having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is free of threaded parts; and securing means (5) preventing rotation of an engaged abutment (12) in the form of a multifaced protrusion (6) located in said contact region (3).

Another example concerns a dental implant (1) made of biocompatible ceramics having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is free of threaded parts, and securing means (5) preventing rotation of an engaged abutment (12) in the form of a multifaced indentation (7) located in said contact region (3).

### SUMMARY OF THE INVENTION

In one aspect the present invention relates to a dental implant (1) made of biocompatible ceramics having an outer threaded part (2); a contact region (3) for contacting an abutment (12); a longitudinal axis, and an indentation (4a) within the contact region (3) suitable to insert a protrusion (15a) of said abutment (12), wherein the contact surface of said indentation (4a) with said protrusion (15a) is free of threaded parts; and wherein the thread-profile of said outer threaded part (2) comprises an apical flank and a distal flank. The acute angle (β) between the apical flank and the longitudinal axis is smaller than the acute angle (γ) between the distal flank and the longitudinal axis, the acute angle (β) being between 5 and 18 degree.

In a further aspect the present invention provides a dental implant (1) made of biocompatible ceramics having an outer threaded part (2); a contact region (3) for contacting an abutment (12); a longitudinal axis, and a protrusion (4b) within the contact region (3) suitable to be inserted into an indentation (15b) of said abutment (12), wherein the contact surface of said protrusion (4b) with said indentation (15b) is free of threaded parts; and wherein the thread-profile of said outer threaded part (2) comprises an apical flank and a distal flank. The angle (β) between the apical flank and the longitudinal axis is smaller than the acute angle (γ) between the distal flank and the longitudinal axis, the acute angle (β) being between 5 and 18 degree.

An example concerns an abutment (12) made of biocompatible ceramics, having a prosthetic head (13) and a contact region (14) with a protrusion (15a), suitable to be inserted in an indentation (4a) of a contact region (3) of a dental implant (1) according to the present invention.

Another example relates to an abutment (12) made of biocompatible ceramics, having a prosthetic head (13) and a contact region (14) with an indentation (15b), suitable to be connected to the protrusion (4b) of a contact region (3) of a dental implant (1) according to the present invention.

In a further embodiment the present invention provides a two-part dental implant made of biocompatible ceramics comprising a dental implant (1) according to the present invention, and an abutment (12).

In one embodiment the present invention concerns a three-part dental implant made of biocompatible ceramics comprising a dental implant (1) according to the present invention, an abutment (12) and a crown or superstructure.

Another example relates to the use of the dental implant (1) as described above for insertion into the mandibular or maxillary bone of a patient.

A further example concerns the use of the abutment (12) as described above for the connection to a dental implant (1) described above.

A still further example pertains to the use of an abutment (12) described above as a prosthetic head for a crown or superstructure.

### DESCRIPTION OF THE PREFERRED EMBODIMENTS OF THE INVENTION

Before the present invention is described in more detail below, it is to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

As outlined above there is a need in the prior art to provide a stable connection between the implant part and the abutment part of a two-part dental implant made of biocompatible ceramics.

A first example provides a dental implant (1) made of biocompatible ceramics having an outer threaded part (2); a contact region (3) for contacting an abutment (12); an indentation (4a) within the contact region (3) suitable to insert a protrusion (15a) of said abutment (12), wherein the contact surface of said indentation (4a) with said protrusion (15a) is essentially free of threaded parts; and securing means (5) preventing rotation of an engaged abutment (12) in the form of a multifaced protrusion (6) located in said contact region (3).

In one embodiment of the dental implant (1) according to the first example the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

A second example provides a dental implant (1) made of biocompatible ceramics having an outer threaded part (2); a contact region (3) for contacting an abutment (12), an indentation (4a) within the contact region (3) suitable to insert a protrusion (15a) of said abutment (12); wherein the contact surface of said indentation (4a) with said protrusion (15a) is essentially free of threaded parts; and securing means (5) preventing rotation of an engaged abutment (12) in the form of a multifaced indentation (7) located in said contact region (3).

In one embodiment of the dental implant (1) according to the second example the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

A third example provides a dental implant (1) made of biocompatible ceramics having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is essentially free of threaded parts; and securing means (5) preventing rotation of an engaged abutment (12) in the form of a multifaced protrusion (6) located in said contact region (3).

In one preferred embodiment of the dental implant (1) according to the third example the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

A fourth example provides a dental implant (1) made of biocompatible ceramics having an outer threaded part (2); a contact region (3) for contacting an abutment (12); a protrusion (4b) within the contact region (3) suitable to be inserted into an indentation (15b) of said abutment (12), wherein the contact surface of said protrusion (4b) with said indentation (15b) is essentially free of threaded parts, and securing means (5) preventing rotation of an engaged abutment (12) in the form of a multifaced indentation (7) located in said contact region (3).

In one preferred embodiment of the dental implant (1) according to the fourth example the thread-profile of said outer threaded part (2) comprises an apical flank and a distal flank. Preferably the acute angle (β) between the apical flank and the longitudinal axis is smaller than the acute angle (γ) between the distal flank and the longitudinal axis.

In a first aspect the present invention provides a dental implant (1) made of biocompatible ceramics having an outer threaded part (2); a contact region (3) for contacting an abutment (12); a longitudinal axis, and an indentation (4a) within the contact region (3) suitable to insert a protrusion (15a) of said abutment (12), wherein the contact surface of said indentation (4a) with said protrusion (15a) is free of threaded parts; and wherein the thread-profile of said outer threaded part (2) comprises an apical flank and a distal flank. The acute angle (β) between the apical flank and the longitudinal axis is smaller than the acute angle (γ) between the distal flank and the longitudinal axis, the acute angle (β) being between 5 and 18 degree.

In a second aspect the present invention provides a dental implant (1) made of biocompatible ceramics having an outer threaded part (2); a contact region (3) for contacting an abutment (12); a longitudinal axis, and a protrusion (4b) within the contact region (3) suitable to be inserted into an indentation (15b) of said abutment (12), wherein the contact surface of said protrusion (4b) with said indentation (15b) is free of threaded parts; and wherein the thread-profile of said outer threaded part (2) comprises an apical flank and a distal flank. The acute angle (β) between the apical flank and the longitudinal axis is smaller than the acute angle (γ) between the distal flank and the longitudinal axis, the acute angle (β) being between 5 and 18 degree.

In one preferred embodiment of the dental implant (1) according to the first and second aspect of the present invention said contact region (3) has securing means (5) preventing rotation of an engaged abutment (11).

The term "contact region (3)" refers to the entire surface of the dental implant that contacts the corresponding contact region (14) of the abutment. In the embodiments of the dental implant of the present invention comprising a securing means (6,7) this securing means is a separate feature from the indentation (4a) or protrusion (4b) within the contact region (3), characterized by a diameter, shape and/or length different from the indentation (4a) or protrusion (4b).

The securing means of any of the embodiments of the invention may also be used for the insertion of the dental implant (11) into the bones, i.e. with a "wrench-like" tool that engages the securing means. The securing means (5) can have any shape, which if brought into contact with a corresponding securing means on the abutment (17,18) prevents rotation of the abutment relative to the dental implant along the longitudinal axis of the dental implant. The securing means (5) is preferably in the form of a multifaced protrusion (6) or indentation (7) located in the contact region (3), preferably a multifaced protrusion (6) located in the contact region (3), most preferably a multifaced protrusion (6) located in the middle of said contact region (3). This protrusion (6) or indentation (7) is a separate feature within the contact region (3), i.e. the securing means is provided in addition to any indentation (4a) or protrusion (4b) also located in the contact region. The securing means whether it is a protrusion (6) or indention (7) preferably has a larger diameter than any indentation (4a) or protrusion (4b). Thereby the securing means provides an additional interaction surface at the contact region (3) between the abutment and the dental implant, which prevents the breaking of either the protrusion (4b) of the dental implant (1) penetrating the indentation (15b) of the abutment or the protrusion of the abutment (15a) penetrating the indentation (4a) of the dental implant (1). Preferably the diameter of the protrusion (6) or indentation (7) of the securing means is 1.5 to 3-fold, preferably 1.6, 1.7, 1.8, 1.9, 2, 2.1, 2.2, 2.3, 2.4, 2.5, 2.6, 2.7, 2.8, 2.9-fold the diameter of the protrusion (4b) or indentation (4a) or any range defined by two of the various indicated preferred ratios of the respective diameters.

Preferably the protrusion (6) or indentation (7) has a diameter that is equal or slightly smaller, i.e. more than 70%, preferably more than 75%, more than 80%, more than 85%, more than 90% or more than 95% of the outer diameter (o) of the threaded part (2), i.e. 1.5 to 7 mm, e.g. 1.5, 2, 3, 4, 5, 6 or 7 mm or any range defined by two of this preferred values, more preferably between 2 and 6 mm, most preferably between 2.5 and 5.5 mm.

In a preferred embodiments of the dental implant (1) according to the present invention said securing means are of polygonal shape (8) preferably said polygonal shape (8) has n-faces, whereas "n" can be any number between 1 and 50, e.g. 1, 2, 3, 4, S, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50, preferably said polygonal shape has 3, 4, 5, 6, 7, 8, 9 or 10 faces, more preferably 4, 5 or 6 faces or any range defined by the various numbers. Preferably the normal vector of the faces of the polygonal shaped protrusion or indentation are perpendicular to the longitudinal, axis of the dental implant or the angle between the normal and the longitudinal axis is larger than 80%. The shape of the corresponding securing means of the abutment is determined by the shape of the securing means of the dental implant. Measured from the distal flank of the middle part (11) the length of the protrusion (6) or the depth of the indentation (7) will typically have a length/depth of 0.5 to 3 mm, preferably 1.0 to 2.0 mm, preferably 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 or any range defined by these numbers. Due to its larger diameter the multifaced protrusion (6) will generally have a surface that is flat or essentially flat and perpendicular to the longitudinal axis of the dental implant. The smaller diameter protrusion (4b) or indentation (4a) will usually be located in the middle of this plane, preferably along the longitudinal axis. Similarly, also the multifaced indentation (7) will preferably have a flat or essentially flat surface wherein the protrusion (4b) or indentation (4a) is located, preferably along the longitudinal axis.

In one preferred embodiment of the dental implant (1) according to the present invention a surface area of said outer threaded part (2) has a micro roughness of between 2 micron and 50 micron, e.g. 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably between 4 micron and 20 micron to facilitate the ingrowth of osteoblasts and the stable attachment of bone tissue to the implant. It is well known in the art how to measure surface roughness, for example with an alphastep 250 profilometer. The micro roughness provides an excellent contact surface for osteoblasts, which attach to the dental implant and faster "osseo-integration", which is a prerequisite for permanent adherence to the contacting bone surface. Therefore a suitable micro roughness of the implant surface provides a mechanical interlocking between the bone and the implant. Preferably the surface area having above indicated micro roughness covers at least 20 %, more preferably at least 30 %, more preferably at least 40 %, more preferably at least 50 %, more preferably at least 60 %, more preferably at least 70 %, more preferably at least 80 %, more preferably at least 90 % of the surface area of the outer threaded part (2).

The required surface roughness can be achieved by a variety of art known methods including without limitation blasting with aluminium oxide after the implant has been sintered or the roughness can already be achieved through the design of the mould used for forming the ceramic green body during injection moulding or isopressing or the roughness can be achieved through coating with a biocompatible material e.g. ceramic or any biomaterial which could be suitable to achieve a better implant to bone contact or by surface manipulation through a laser technique.

In another embodiment of the dental implant (1) according to the present invention said outer threaded part (2) has a diameter and length suitable to be inserted into the mandibular or maxillary bone. Ideally all roots of teeth have been removed prior to drilling the hole into which the dental implant is placed. However, it is also possible to drill a hole into a bone still comprising all or parts of a natural root. The dental implant is ultimately stabilized and securely attached to the bone by the ingrowth of osteoblasts into the dental implant. In addition an outer threaded part (2) is provided which serves the purpose of mechanical stabilizing the dental implant in the bone.

The threaded part can have any art known form. The thread can be either right handed or left handed and can have a wide variety of pitches and thread shapes. Preferably the thread lead has a pitch (α) of between 6 and 18 degree, e.g. 6, 7, 8, 9, 10, 11, 12, 13, 14, 15, 16, 17, or 18 degree or is within any range defined by two values of the preferred pitches (α), preferably pitch

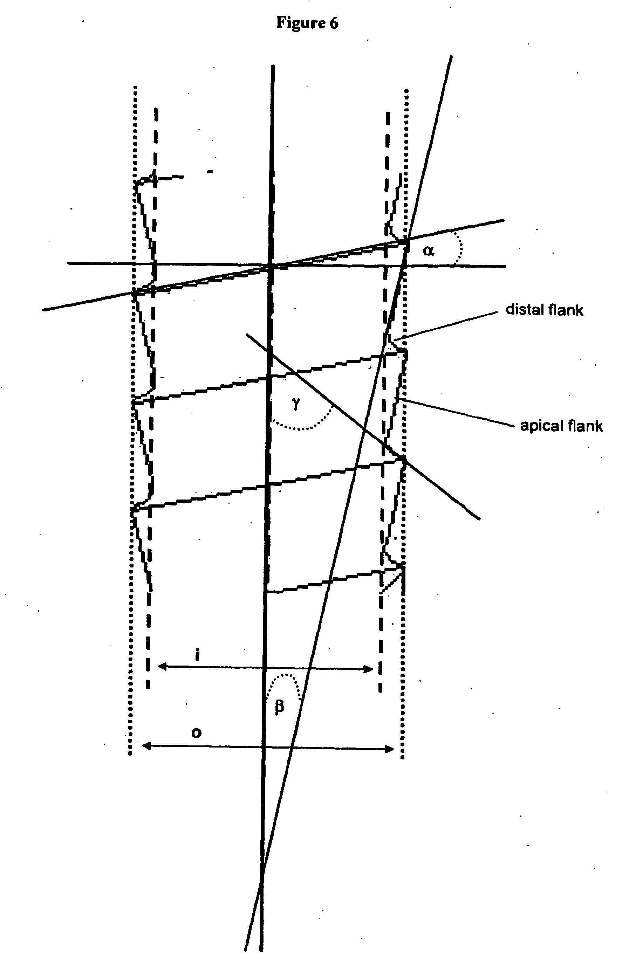

(α) is between 8 and 15 degree and more preferably about 12 degree. As is apparent from Fig. 6 the pitch of the thread lead is determined as the projection of the thread on the screw cross section. The distance between one turn of the thread to the next turn is preferably of between 1 and 2 mm, more preferably of between 1.2 and 1.8 mm, more preferably of between 1.4 and 1.6 mm and most preferably about 1.5 mm.

In one preferred embodiment there is a difference between the core drilling (the "inner diameter (i)") and the edge of each turn of the thread (the "outer diameter (o)"), wherein said difference is preferably of between 0.1 and 3.0 mm, preferably 0.5 to 1.5 mm, more preferably about 1 mm. This difference is also referred to as the "depth of the thread". The respective difference depends in part on the respective outer diameter (o). It is preferred that, that the inner diameter (i) is 10 to 20% smaller than the outer diameter (o).

In another preferred embodiment of the thread-profile of said outer threaded part (2) comprises an apical flank and a distal flank. It is further preferred, that the distal flank immediately contacts the apical flank, i.e. without an intervening section, which is e.g. parallel to the longitudinal axis. The contact point between the distal and the apical flank can be rounded. Preferably, the faces of the apical and/or distal flank are essentially plane, preferably plane, over the whole length of the flank, e.g. at least over a length of 80%, 85%, 90%, 91%, 92%, 93%, 94%, or 95%, 96%, 97% or 98% of the entire length of the flank. The length of the flank is the length of the surface of the flank between the points, where the flank reaches the inner and outer diameter, respectively. Preferably the flanks comprise a small section at each end, i.e. at the connection point with the next flank, which is not plane but rounded. The length of this section preferably varies between 1% and 15%, e.g. 1%, 2%, 3%, 4%, 5%, 6%, 7%, 8%, 9%, 10%, 11%, 12%, 13%, 14%, 15% of the entire length of a given flank, or is within any range defined by two values of the preferred length of this section. The acute angle (β) between the apical flank and the longitudinal axis is smaller than the acute angle (γ) between the distal flank and the longitudinal axis.

According to the invention the apical flank has an acute angle (β) to the longitudinal axis of between 5 and 18 degree, preferably of between 8 and 15 degree and more preferably about 10 degree. In addition, the distal flank has an acute angle (γ) to the longitudinal axis of between 40 and 60 degree, e.g. 40, 41, 42, 43, 44, 45, 46, 47, 48, 49, 50, 51, 52, 53, 54, 55, 56, 57, 58, 59, or 60 degree or any range defined by two values of the preferred acute angles (γ), preferably of between 45 and 55 degree and more preferably about 50 degree. Thus, a kind of skewback in the bone is observed.

It is preferred that the threaded part (2) has the same thread parameters, e.g. pitch of the thread lead, depth of the thread and thread profile (angle (β) and angle (γ), length of the plane section, form of the contact points of the apical and distal flank) over the entire length. Accordingly, it is preferred that the dental implant comprises only one thread type.

In a preferred embodiment the apical peak of the threaded part is preferably conically formed meeting preferably in a blunt bottom. The cone at the apical peak preferably has a radius of between 1.5 and 2.5 mm, e.g. 1.1, 1.2, 1.3, 1.4, 1.5, 1.6, 1.7, 1.8, 1.9, 2.0, 2.1, 2.2, 2.3, 2.4, or 2.5 or any range defined by two values of the preferred radiuses, preferably 2.0 mm.

In a preferred embodiment of the dental implant (1) according to the present invention said outer threaded part (2) has a length of between 2 and 20 mm, e.g. 2, 3, 4, 5, 6, 7, 8, 9, 10, 11, 12, 13, 14, 15, 16, 17, 18, 19, or 20 mm or the length is within any range defined by two values of the preferred lengths, preferably between 8 and 15 mm.

The outer diameter of the threaded part is preferably between 1.5 and 7 mm, e.g. 1.5, 2, 3, 4, 5, 6 or 7 mm or the diameter is within any range defined by two values of the preferred diameters, more preferably between 2 and 6 mm, most preferably between 2.5 and 5.5 mm.

It is particularly preferred that the dental implant according to the invention has a length of between 2 and 20 mm an outer diameter of between 1 and 7 mm is preferred, and at a length of between 8 and 15 mm an outer diameter of between 2.5 and 5.5 mm is preferred.

The outer threaded part (2) will in most embodiments extend over the entire length of the part of the dental implant inserted into the bone. These threads are preferably present on the cylindrical sections of the dental implant of the present invention, while a tip, which might be attached at the apical end of the dental implant, will preferably not comprise threads. Such a tip can have any shape as long as its diameter does not extend over the diameter of the outer threaded part (2) to which it is attached, i.e. the outer diameter of the outer threaded part, preferably its diameter does not extend beyond the inside diameter of the outer threaded part (2). The tip preferably has a round, pointed or blunt shape. As it is not always required that the entire part of the threaded implant inserted into the bone is threaded, the dental implant in some embodiments comprises further parts inserted into the bone, which are not threaded. These one or more further parts are preferably located towards the apical end of the dental implant and/or towards the contact region, preferably towards the transgingival part (9). Preferably any further part which is not threaded and is inserted into the bone is also provided with a rough surface as defined above.

In a preferred embodiment of the dental implant (1) according to the present invention the dental implant (1) further comprises in one piece a transgingival part (9). The transgingival part extends over the bone tissue, but will in most embodiments not extend over the gingival tissue of the patient. Accordingly, it will be possible in most embodiments to close the gingival flap after implantation of the dental implant to allow undisturbed ingrowth of the dental implant.

In another embodiment of the dental implant (1) according to the present invention said contact region (3) is localized on the transgingival part (9) of the dental implant (1).

In a preferred embodiment of the dental implant (1) according to the present invention the said transgingival part (9) has preferably a total length of between 1 to 4 mm and a diameter of between 2 to 9 mm, wherein the difference in diameter between the outer diameter of the threaded part (2) is preferably in the range of 0.1 to 2 mm, more preferably 0.3 to 1.0 mm. In one embodiment the diameter of the transgingival part (9) can change over the length of the transgingival part (9) to form, e.g. securing means.

In one preferred embodiment of the dental implant (1) according to the present invention the transgingival part (9) a middle part (11), securing means (5), and the contact region (3).

In another preferred embodiment said transgingival part (9) is connected to the outer threaded part (2) via a conical junction (10), which preferably does not extend the bone. Said conical junction (10) preferably has an angle towards the contact region of between 1 and 7 degree, e.g. 1, 2, 3, 4, 5, 6 or 7 degree, preferably of between 2 and 5 degree and a length of between 0.3 to 3 mm, e.g. 0.3, 1, 2 or 3 mm, preferably of between 0.5 and 1.5 mm, more preferably about 1 mm. In addition, said middle part (11) has a cylindrical shape and a length of between 0.1 to 3 mm, e.g. 0.1, 1, 2 or 3 mm, preferably of between 0.2 and 1.5 mm, more preferably about 1 mm.

In another preferred embodiment of the dental implant (1) according to the present invention the diameter of said contact region (3) is smaller in diameter than the cylindrical middle part (11), wherein the diameter of said cylindrical middle part is bigger than the diameter of the threaded part (2).

In one embodiment of the dental implant (1) according to the present invention a surface roughness of said transgingival part (9) has a micro roughness of less than 2 micron, more preferably of less than 1 micron.

In a further embodiment of the dental implant (1) according to the present invention the cross section of said indentation (4a)/or protrusion (4b) at the contact region (3) is selected from the group of cross sections, oval and multifaced.

In one embodiment of the dental implant (1) according to the present invention the indentation (4a) has a length of between 1 and 19 mm, e.g. 1, 2, 3, 4, 5, 6, 7, 8, 9, 10, 11, 12, 13, 14, 15, 16, 17, 18, or 19 mm, preferably of between 1 and 10 mm, more preferably of between 1 and 7 mm, wherein said indentation (4a) essentially extends throughout the length of the dental implant (1), preferably without protruding from the apical part of the dental implant, i.e. preferably the dental implant does not comprise a hole at the apical part. The respective maximal length of the indentation (4a) is determined by the size of the threaded part of the dental implant.

In one embodiment of the dental implant (1) according to the present invention the protrusion (4b) has a length of between 1 and 19 mm, e.g. 1, 2, 3, 4, 5, 6, 7, 8, 9, 10, 11, 12, 13, 14, 15, 16, 17, 18, or 19 mm, preferably of between 1 and 10 mm, more preferably of between 1 and 7 mm, most preferably of between 1 and 4 mm.

If the dental implant comprises a multifaced protrusion (6) as securing means the length of the indentation (4a) or the protrusion (4b) is measured from the distal end of the securing means, e.g. the plane or essentially plane surface. If the dental implant comprises a multifaced indentation (7) as securing means the length of the indention (4a) or protrusion (4b) is measured from the distal end of the indentation, e.g. the plane or essentially plane surface.

The respective length of the protrusion (4b) and indentation (4a) is preferably chosen in such that once the protrusion (4b) is engaged with the indentation of the abutment (15b) or the indentation (4a) is engaged with the protrusion of the abutment (15a) that a space of 0.1 to 2.0 mm length remains between the end of the protrusion (4b, 15a) and the bottom of the indentation (4a, 15b). This space can, e.g. hold excess adhesive applied to the dental implant or the abutment.

In another embodiment of the dental implant (1) according to the present invention the indentation (4a)/or protrusion (4b) has a diameter of between 0.5 and 6 mm, e.g. 0.5, 1, 2, 3, 4, 5 or 6 mm, preferably of between 1 and 4 mm, more preferably between 1 and 2, wherein the diameter might vary over the length of said indentation (4a)/or protrusion (4b). Preferably, the form and width of the cross section does not change over the length of the indentation (4a)/or protrusion (4b), however, it also can be tapered towards the bottom of the indentation (4a)/or protrusion (4b). It is also possible that the cross section changes over the length between any of above preferred forms of the cross section as long as this change does not prevent the close contact between said indentation (4a)/or protrusion (4b) and said protrusion (15a)/or indentation

(15b) of the engaged abutment (12). The respective maximal diameter of the indentation (4a)/or protrusion (4b) is determined by the inner diameter of the threaded part in case of the indentation (4a) or the outer diameter of the abutment (12) in case of the protrusion (4b). The diameter has to be sufficient to provide resistance against lateral forces, which are typically applied to the abutment during use and should not be so large to reduce the stability of either the threaded part or the abutment part. A sufficient wall thickness of the threaded part would, i.e. the thickness of the ceramic material between the inner diameter of the threaded part (2) and the indentation (4a) or the thickness of the ceramic material between the outer diameter of the abutment (12) and the protrusion (4b) extending into the abutment, should be at least 0.5 mm for small dental implants, e.g. 1.5 to 2 mm diameter and should be at least 0.8 mm for larger diameter implants. Typically, the relation of the diameter of the indentation (4a) to thickness of the wall will be in the range from 1:2 to 2:1.

In another preferred embodiment of the dental implant (1) according to the present invention the biocompatible ceramics comprises a ceramic material selected from the group consisting of zirconium oxide, aluminium oxide, yttrium oxide, hafnium oxide, silicon oxide, magnesium oxide, cerium oxide and other metal oxides. The pure or mixed ceramic materials can have various crystal forms including, for example, trigonal, hexagonal etc. as can be found, e.g. in ruby and sapphire. Preferably, the ceramic material consist of zirconium oxide, hafnium oxide, yttrium oxide, aluminium oxide and other metal oxides.

In a preferred embodiment, 90 to 99,9 % of the ceramic composition comprises zirconium oxide, yttrium oxide and hafnium oxide and 0.01% to 10 % aluminium oxide and other metal oxides, preferably 95 to 99,9 % of the ceramic composition comprises zirconium oxide, yttrium oxide and hafnium oxide and 0.01 to 5 % aluminium oxide and other metal oxides, more preferably 98 to 99,9 % of the ceramic composition comprises zirconium oxide, yttrium oxide and hafnium oxide and 0.01 to 2 % aluminium oxide and other metal oxides, more preferably 99 to 99,9 % of the ceramic composition comprises zirconium oxide, yttrium oxide and hafnium oxide and 0.01 to 1 % aluminium oxide and other metal oxides, e.g. 99.72 % of the ceramic composition will be composed of zirconium oxide, yttrium oxide and hafnium oxide.

In a preferred embodiment the ceramic composition comprises 88 to 95 % by weight of zirconium oxide, 3 to 7 % by weight yttrium oxide, 1 to 4 % by weight of hafnium oxide, 0.1 to 1 % by weight aluminium oxide and 0.01 to 0.5% of other metal oxides, preferably the ceramic composition comprises 90 to 94 % by weight of zirconium oxide, 4 to 6 % by weight yttrium oxide, 1.5 to 2.5 % by weight of hafnium oxide, 0.2 to 0.5 % by weight aluminium oxide and 0.02 % to 0.2 of other metal oxides, more preferably the ceramic composition comprises 92 to 93 % by weight of zirconium oxide, 5 to 6 % by weight yttrium oxide, 2 to 3 % by weight of hafnium oxide, 0.2 to 0.3 % by weight aluminium oxide and 0.02 to 0.05 % of other metal oxides, e.g. 92.61% by weight of zirconium oxide, 5.08% by weight yttrium oxide, 2.03% by weight of hafnium oxide, 0.254% by weight aluminium oxide and 0.036% of other metal oxides.

In another example an abutment (12) made of biocompatible ceramics is provided; having a prosthetic head (13) and a contact region (14) with a protrusion (15a), suitable to be inserted in an indentation (4a) of a contact region (3) of a dental implant (1) according to the present invention.

In a further example an abutment (12) made of biocompatible ceramics is provided, having a prosthetic head (13) and a contact region (14) with an indentation (15b), suitable to be connected to the protrusion (4b) of a contact region (3) of a dental implant (1) according to the present invention.

In one embodiment of the abutment (12) said protrusion (15a)/or indentation (15b) is essentially free of any threaded parts.

In another embodiment of the abutment (12) the cross section of said protrusion (15a)/or indentation (15b) is selected from the group of cross sections consisting of round, oval, and multifaced. In addition, the protrusion (15a) has a length of between 1mm and the length of the corresponding dental implant, preferably 1 and 19 mm, e.g. 1, 2, 3, 4, 5, 6, 7, 8, 9, 10, 11, 12, 13, 14, 15, 16, 17, 18, or 19 mm, preferably between 1 and 10 mm, more preferably of between 1 and 7 mm. Further, the indentation (15b) has a length of between 1 mm and the length of the abutment, preferably 1 and 10 mm, e.g. 1, 2, 3, 4, 5, 6, 7, 8, 9, or 10, preferably between 1 and 5 mm, more preferably between 1 and 4 mm.

In one embodiment of the abutment (12) the protrusion (15a)/or indentation (15b) has a diameter of between 0.5 and 6 mm, e.g. 0.5, 1, 2, 3, 4, 5 or 6 mm, preferably between 1 and 4 mm, more preferably between 1 and 2, wherein the diameter might vary over the length of said protrusion (15a)/or indentation (15b). Preferably, the form and width of the cross section does not change over the length of the protrusion (15a)/or indentation (15b), however, it also can be tapered towards the bottom of the protrusion (15a)/or indentation (15b). It is also possible that the cross section changes over the length between any of above preferred forms of the cross section as long as this change does not prevent the close contact between the protrusion (15a)/or indentation (15b) and the indentation (4a)/or protrusion (4b) of the engaged dental implant (1).

In a preferred embodiment of the abutment (12) the contact region (14) has securing means (16) preventing rotation of an engaged dental implant (1). The term "contact region (14)" refers to the entire surface of the abutment (12) that contacts the corresponding contact region (3) of the dental implant (1). In the embodiments of the dental implant of the present invention comprising a securing means (16,17,18) this securing means is a separate feature from the indentation (15b) or protrusion (15a) within the contact region (14), characterized by a diameter, shape and/or length different from the indentation (15b) or protrusion (15a). The securing means can have any shape, which if brought into contact with a corresponding part on the dental implant, prevents rotation. Preferably, the securing means (16) is in the form of a multifaced protrusion (17) or indentation (18) in the contact region (14). Whether the abutment (12) is respectively provided with a protrusion (17) or indentation (18) depends on whether the corresponding dental implant to which the abutment will be attached comprises a multifaced indentation (7) and a protrusion (6), respectively. This multifaced protrusion (17) or indentation (18) is a separate feature within the contact region (14), i.e. the securing means is provided in addition to any indentation (15b) or protrusion (15a) also located in the contact region. The securing means whether it is a protrusion (17) or indention (18) preferably has a larger diameter than any indentation (15b) or protrusion (15a).Thereby the securing means provides an additional interaction surface at the contact region (14) between the abutment and the dental implant, which prevents the breaking of either the protrusion (4b) of the dental implant (1) penetrating the indentation (15b) of the abutment (12) or the protrusion (15a) of the abutment (12) penetrating the indentation (4a) of the dental implant (1). Preferably the diameter of the protrusion (17) or indentation (18) of the securing means is 1.5 to 3-fold, preferably 1.6, 1.7, 1.8, 1.9, 2, 2.1, 2.2, 2.3, 2.4, 2.5, 2.6, 2.7, 2.8, 2.9-fold the diameter of the protrusion (4b) or indentation (4a) or any range defined by two of the various indicated preferred ratios of the respective diameters.

Preferably the protrusion (17) or indentation (18) has a diameter that is equal or slightly smaller, i.e. more than 70%, preferably more than 75%, more than 80%, more than 85%, more than 90% or more than 95% of the outer diameter (o) of the threaded part (2), i.e. 1.5 to 7 mm, e.g. 1.5, 2, 3, 4, 5, 6 or 7 mm or any range defined by two of this preferred values, more preferably between 2 and 6 mm, most preferably between 2.5 and 5.5 mm.

More preferably, said multifaced protrusion (17) or indentation (18) is of a polygonal shape (8), wherein said polygonal shape (8) has n-faces, whereas "n" can be any number between 1 and 50, e.g. 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably said polygonal shape has 3, 4, 5, 6, 7, 8, 9 or 10 faces, more preferably 4, 5 or 6 faces. Above further preferred embodiments of the protrusions (6) and indentation (7) of the dental implant have been described. It is understood by someone of skill that the design of a correspond securing means of the abutment is determined by the size and shape of the securing means of the dental implant. Accordingly, the securing means of the abutment may have all the shapes determined by the respectively indicated preferred securing means of the dental implant (1).

In one embodiment of the dental implant according to the present invention the prosthetic head (13) of the abutment has a width and/or length suitable to avoid a post-processing step. Most prior art implants have a voluminous prosthetic head, which has to be further processed after implantation to allow attachment of, e.g. the crown or superstructure. Post-processing steps, e.g. grinding of the prosthetic head, is often accompanied with an impairment of the prosthetic head and, therefore, avoiding this step provides a further advantage to the dental implants of the present invention. While the teeth between two patients do not markedly vary in their length there is a large variation laterally between similar teeth of two persons. Thus, a post-processing step is always necessary in cases when the dental implant has a width, which given the respective lateral space available will not allow the attachment of, e.g. a crown or superstructure. No post-processing steps are needed, when the width of the prosthetic head is selected in such that it is appropriate for the respective tooth space to be closed. Thus, in a preferred embodiment the width of the prosthetic head (13) of the abutment is within the range of 2.0 to 11.0 mm, e.g. 2, 3, 4, 5, 6, 7, 8, 9, or 10 mm, or is within any range defined by two of these numbers, more preferably in the range of 2.5 to 8.0 mm, even more preferably in the range of 3.0 to 7.0 mm and most preferably in the range of about 3.5 to about 5.8 mm, preferably at the apical end of the abutment, wherein the diameter might vary over the length. Preferably, the prosthetic head has a length of between 2 and 10 mm, e.g. 1, 2, 3, 4, 5, 6, 7, 8, 9, or 10 mm, preferably of between 3 and 5 mm, preferably of between 2 and 4 mm, measured from the contact region (14) to the coronal region of said abutment (12).

In further examples a set of abutments varying in the width of the prosthetic head (13) is provided. The dentist will then be capable to select one abutment with a width suitable to attach, e.g. a crown or superstructure, or with a size suitable to fill the gap. Such a set of abutments comprises at least 2 abutments with prosthetic heads with different width and optionally corresponding dental implants (1). Preferably, the two widths are within above ranges and preferred ranges. A particular preferred set comprises 3, 4, 5, 6, 7, 8, 9, 10, 11, 12, 13, 14, 15, 16, 17, 18, 19 or 20 abutments each having a prosthetic head (13) with different diameters, preferably equally distributed in the range of 2.0 to 11.0 mm, more preferably in the range of 2.5 to 8.0 mm, even more preferably in the range of 3.0 to 7.0 mm and most preferably in the range of about 3.5 to about 5.8 mm.

In another preferred embodiment the prosthetic head (13) is of conical shape. In this embodiment it has above indicated preferred widths at its base and is tapered to the top. The tapering is preferably with an angle of between 1° to 15°, e.g. 1°, 2°, 3°, 4°, 5°, 6°, 7°, 8°, 9°, 10°, 11 °, 12°, 13°, 14°, or 15°. This tapering facilitates the attachment of crowns or superstructures and/or the scanning of the prosthetic head once the abutment has been attached to the dental implant of the present invention. Such a scan can then be used, e.g. to manufacture the crown or superstructure to be attached to the prosthetic head, e.g. by CAD/CAM devices or by a dental technician, in such a way that it on one hand fits exactly to the protruding prosthetic head (13) and on the other hand will be positioned correctly with respect to the surrounding teeths.

In another embodiment of the abutment (12) said abutment is designed to consistently engage with the dental implant (1) according to the present invention.

In one embodiment of the abutment (12) said abutment (12) is wider in diameter than the engaged dental implant (1) and has a conical shape towards the coronal end, with an angle of between 1 and 10 degree, e.g. 1, 2, 3, 4, 5, 6, 7, 8, 9, or 10, preferably of between 2 and 5, more preferably 3 degree with respect to the longitudinal axis of the abutment (12).

In a preferred embodiment of the abutment (12) the biocompatible ceramics comprises a ceramic material selected from the group consisting of zirconium oxide, aluminium oxide, yttrium oxide, hafnium oxide, silicon oxide, magnesium oxide, cerium oxide and other metal oxides. The pure or mixed ceramic materials can have various crystal forms including, for example, trigonal, hexagonal etc. as can be found, e.g. in ruby and sapphire. Preferably, the ceramic material consist of zirconium oxide, hafnium oxide, yttrium oxide, aluminium oxide and other metal oxides.

In a preferred embodiment, 90 to 99,9 % of the ceramic composition consists of zirconium oxide, yttrium oxide and hafnium oxide and 0.01% to 10 % of the ceramic composition consists of aluminium oxide and other metal oxides, preferably 95 to 99,9 % of the ceramic composition comprises zirconium oxide, yttrium oxide and hafnium oxide and 0.01 to 5 % aluminium oxide and other metal oxides, more preferably 98 to 99,9 % of the ceramic composition consists of zirconium oxide, yttrium oxide and hafnium oxide and 0.01 to 2 % of the ceramic composition consists of aluminium oxide and other metal oxides, more preferably 99 to 99,9 % of the ceramic composition comprises zirconium oxide, yttrium oxide and hafnium oxide and 0.01 to 1 % aluminium oxide and other metal oxides, e.g. 99.72 % of the ceramic composition will be composed of zirconium oxide, yttrium oxide and hafnium oxide.

In a preferred embodiment the ceramic composition comprises 88 to 95 % by weight of zirconium oxide, 3 to 7 % by weight yttrium oxide, 1 to 4 % by weight of hafnium oxide, 0.1 to 1 % by weight aluminium oxide and 0.01 to 0.5% of other metal oxides, preferably the ceramic composition comprises 90 to 94 % by weight of zirconium oxide, 4 to 6 % by weight yttrium oxide, 1.5 to 2.5 % by weight of hafnium oxide, 0.2 to 0.5 % by weight aluminium oxide and 0.02 % to 0.2 of other metal oxides, more preferably the ceramic composition comprises 92 to 93 % by weight of zirconium oxide, 5 to 6 % by weight yttrium oxide, 2 to 3 % by weight of hafnium oxide, 0.2 to 0.3 % by weight aluminium oxide and 0.02 to 0.05 % of other metal oxides, e.g. 92.61% by weight of zirconium oxide, 5.08% by weight yttrium oxide, 2.03% by weight of hafnium oxide, 0.254% by weight aluminium oxide and 0.036% of other metal oxides.

In another embodiment of the abutment (12) said abutment (12) further comprises a crown or superstructure in one piece, whereas the crown or superstructure which is separately manufactured has been sintered together with the abutment to form one piece.

In a further aspect the present invention provides a two-part dental implant made of biocompatible ceramics comprising a dental implant (1) according to the present invention and an abutment (12).

In one embodiment of the two-part dental implant according to the present invention the dental implant (1) and the abutment (12) are connectable to each other with an adhesive.

In a preferred embodiment the two-part dental implant according to the present invention are adhered to each other by any adhesive (also termed cement). A large number of suitable adhesives are known in the art of dentistry suitable to connect two parts of , e.g. an implant. Preferably the adhesive is selected from the group of adhesives comprise without limitation: zinc phosphate cements, carboxylate cements, glass ionomer cements, hybrid cements, composite cements, cyanacrylate adhesives, and polyacrylate adhesives.

In another embodiment of the two-part implant according to the present invention said abutment (12) further comprises a crown or superstructure in one piece, whereas the crown or superstructure has been sintered together with the abutment to form one piece.

In a further aspect of the present invention, the object thereof is solved by providing a three-part dental implant made of biocompatible ceramics comprising a dental implant (1) according to the preset invention, an abutment (12) and a crown or superstructure

The dental implant (1) as described above can be used for insertion into the mandibular or maxillary bone of a patient.

The dental implant according to the present invention can be screwed and/or cemented into the mandibular or maxillary bone of a patient.

The abutment (12) as described above can be used for the connection to a dental implant (1) described above

The abutment (12) described above can be used as a prosthetic head for a crown or superstructure.

A further aspect, which is not part of the present invention, concerns a method of implanting a two-part dental implant of the present invention, preferably wherein the threaded-profile of the outer threaded part (2) comprises an apical flank and a distal flank, more preferably the acute angle (β) between the apical flank and the longitudinal axis is smaller than the acute angle (γ) between the distal flank and the longitudinal axis, wherein the dental implant (1) is implanted into the bone and the abutment (12) is attached to the dental implant after 3 months, 2 months, 4 weeks, 3 weeks, 2 weeks, 7, 6, 5, 4, 3, 2, 1 days after the implantation of the dental implant.

Preferably, the abutment is attached immediately, e.g. within a period of 0 to 3 hours after implantation of the dental implant.

### BRIEF DESCRIPTION OF THE DRAWINGS

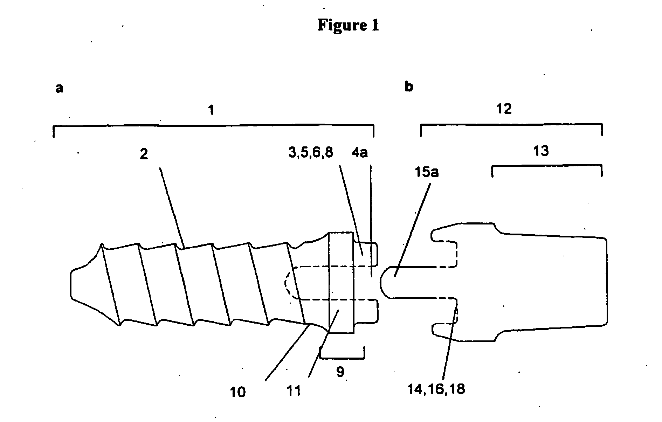

**Figure 1****:** Shows a two-part medicinal device. The first part is a dental implant (1) comprising a outer threaded part (2), a contact region (3), an indentation (4a), a transgingival part (9), a middle part (11) and securing means (5) having a polygonal shape (8) in form of a multifaced protrusion (6); and the second part is an abutment (12) comprising a prosthetic head (13), a contact region (14), a protrusion (15a) and securing means (16) in form of a multifaced indentation (18).

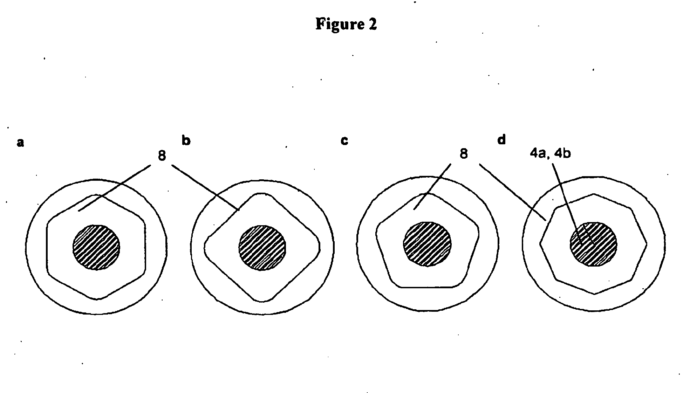

**Figure 2****:** Shows the top view of the dental implant, wherein the securing means are shown in form of a multifaced protrusion (6) or indentation (7), having a polygonal shape (8) with 6 faces (a), 4 faces (b), 5 faces (c) and 8 faces (d).

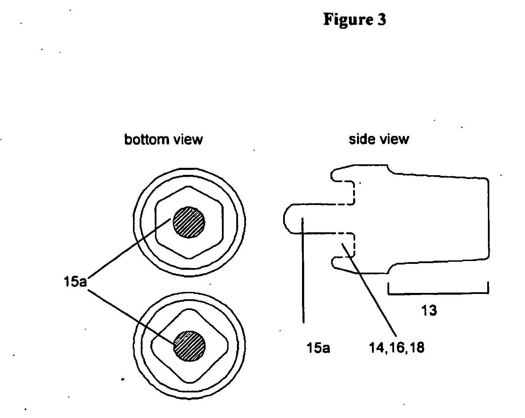

**Figure 3****:** Shows the bottom view and the side view of the abutment having a protrusion (15a)

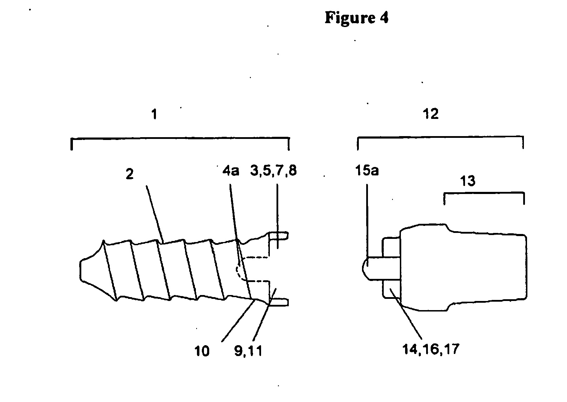

**Figure 4****:** Shows a two-part medicinal device: a dental implant (1) comprising an outer threaded part (2), a contact region (3), an indentation (4a), a transgingival part (9), a middle part (11) and securing means (5) in from of a multifaced indentation (7). An Abutment (12) comprising a prosthetic head (13), a contact region (14), a protrusion (15a) and securing means (16) in form of a multifaced protrusion (17).

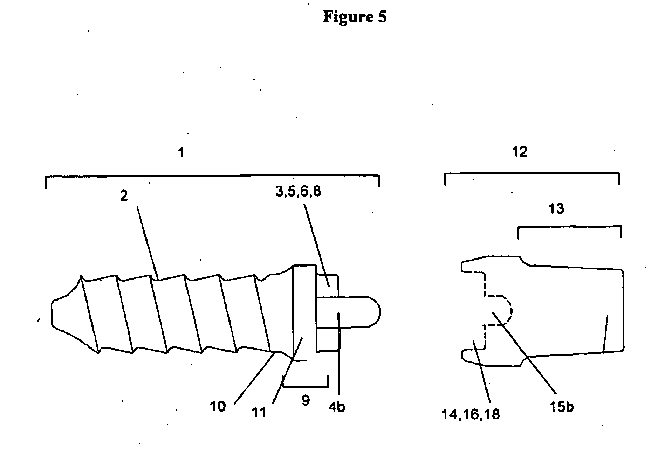

**Figure 5****:** Shows a two-part medicinal device: a dental implant (1) comprising an outer threaded part (2), a contact region (3), a protrusion (4b), a transgingival part (9) and securing means (5) in from of a multifaced protrusion (6). An Abutment (12) comprising a prosthetic head (13), a contact region (14), an indentation (15b) and securing means (16) in form of a multifaced indentation (18).
**Figure 6****:** Shows a section of the threaded part in one preferred embodiment of the invention, wherein the shaft is tapered towards apical. The angle α depicts the pitch of the threaded part, (a) the apical length of the shaft and (b) the distal length of the shaft.

### LISTING OF REFERENCE NUMERALS

- 1: dental implant
- 2: outer threaded part (of the dental implant)
- 3: contact region (of the dental implant)
- 4a: indentation (of the dental implant)
- 4b: protrusion (of the dental implant)
- 5: securing means (of the dental implant)
- 6: multifaced protrusion (of the dental implant)
- 7: multifaced indentation (of the dental implant)
- 8: polygonal shape (of the dental implant)
- 9: transgingival part (of the dental implant)
- 10: conical junction (of the dental implant)
- 11: middle part (of the dental implant)
- 12: abutment
- 13: prosthetic head (of the abutment)
- 14: contact region (of the abutment)
- 15a: protrusion (of the abutment)
- 15b: indentation (of the abutment)
- 16: securing means (of the abutment)
- 17: multifaced protrusion (of the abutment)
- 18: multifaced indentation (of the abutment)

## Claims

1. Dental implant (1) made of biocompatible ceramics having an outer threaded part (2); a contact region (3) for contacting an abutment (12) a longitudinal axis, and an indentation (4a)/or protrusion (4b) within the contact region (3) suitable to insert a protrusion (15a)/or to be inserted in an indentation (15b) of said abutment (12), wherein the contact surface of said indentation (4a)/or protrusion (4b) with said protrusion (15a)/or indentation (15b) is free of threaded parts; and wherein the thread-profile of said outer threaded part (2) comprises an apical flank and a distal flank, wherein the acute angle (β) between the apical flank and the longitudinal axis is smaller than the acute angle (γ) between the distal flank and the longitudinal axis, **characterized in that** the apical flank has an acute angle (β) to the longitudinal axis of between 5 and 18 degree.

2. Dental implant (1) according to claim 1, wherein said contact region (3) has securing means (5) to prevent rotation of an engaged abutment (12); wherein the securing means (5) is a separate feature from the indentation (4a) or protrusion (4b) within the contact region (3) and has a diameter shape and/or length different from the indentation (4a) or protrusion (4b).

3. Dental implant (1) according to claim 2, wherein said securing means (5) is in the form of a multifaced protrusion (6) or indentation (7) located in the contact region (3).

4. Dental implant (1) according to any one of claims 1 to 3, wherein a surface area of said outer threaded part (2) has a micro roughness of between 2 micron and 50 micron.

5. Dental implant (1) according to any one of claims 1 to 4, wherein said outer threaded part (2) has a diameter and length suitable to be inserted into the mandibular or maxillary bone.

6. Dental implant (1) according to claim 5, wherein said outer threaded part (2) has a length of between 5 and 20 mm and an outer diameter of between 2 and 7 mm.

7. Dental implant (1) according to any one of claims 1 to 6, wherein the distal flank has an acute angle (γ) to the longitudinal axis of between 40 and 70 degrees; and the difference between the inner diameter (i) and the outer diameter (o), i.e. twice the depth of the thread, is of between 0. 1 and 3 mm.

8. Dental implant (1) according to any one of claims 2 to 7, wherein said securing means is of polygonal shape (8).

9. Dental implant (1) according to claim 8, wherein said polygonal shape (8) has 3, 4, 5, 6, 7, 8, 9 or 10 faces.

10. Dental implant (1) according to any one of claims 1 to 9, wherein the dental implant (1) further comprises a transgingival part (9) in one piece.

11. Dental implant (1) according to claim 10, wherein the contact region (3) is localized on the transgingival part (9) of the dental implant (1).

12. Dental implant (1) according to any one of claims 10 or 11, wherein said transginigval part (9) has a middle part (11) and securing means (5).

13. Dental implant (1) according to any one of claims 10 to 12, wherein a surface area of said transgingival part (9) has a micro roughness of less than 2 micron.

14. Dental implant (1) according to any one of claims 1 to 13, wherein the cross section of said indentation (4a)/or protrusion (4b) at the contact region (3) is selected from the group consisting of round, oval and multifaced.

15. Dental implant (1) according to any one of claims 1 to 14, wherein said indentation (4a)/or protrusion (4b) has a diameter of between 0.5 mm and 6 mm and a length of between 1 mm and 19 mm.

16. Dental implant (1) according to any one of claims 1 to 15, wherein the biocompatible ceramics comprises a ceramic material selected from the group consisting of zirconium oxide, aluminium oxide, yttrium oxide, hafnium oxide, silicon oxide, magnesium oxide, and cerium oxide.

17. Two-part dental implant made of biocompatible ceramics comprising a dental implant (1) according to claims 1 to 16 and
an abutment (12) made of biocompatible ceramics, having a prosthetic head (13) and a contact region (14) with a protrusion (15a)/or indentation (15b), suitable to be inserted into an indentation (4a)/or suitable to insert a protrusion (4b) of the contact region (3) of the dental implant (1) wherein said protrusion (15a)/or indentation (15b) is free of any threaded parts, wherein said contact region (14) has securing means (16) preventing rotation of the engaged dental implant (1);
wherein the securing means (16, 17, 18) is a separate feature from the indentation (15b) or protrusion (15a) within the contact region (14) and has a diameter, shape and/or length different from the indentation (15b) or protrusion (15a).

18. Two-part dental implant according to claim 17, wherein the cross section of said protrusion (15a)/or indentation (15b), is selected from the group consisting of round, oval, and multifaced.

19. Two-part dental implant according to any one of claims 17 or 18, wherein said protrusion (15a)/or indentation (15b) has a diameter of between 0.5 mm and 6 mm and a length of between 1 mm and the length of the corresponding dental implant.

20. Two-part dental implant according to any one of claims 17 to 19, wherein said securing means (16) is in the form of a multifaced protrusion (17) or indentation (18) in the contact region (14).

21. Two-part dental implant according to claim 20, wherein said multifaced protrusion (17) or indentation (18) is of polygonal shape.

22. Two-part dental implant according to claim 21, wherein said polygonal shape has 3, 4, 5, 6, 7, 8, 9 or 10 faces.

23. Two-part dental implant according to any one of claims 17 to 22, wherein said prosthetic head (13) has a diameter of between 1 and 5 mm, which might vary over the length, and a length between 2 and 10 mm measured from the contact region (14) to the coronal region of said abutment.

24. Two-part dental implant according to any one of claims 17 to 23, wherein the biocompatible ceramics comprises a ceramic material selected from the group consisting of zirconium oxide, aluminium oxide, yttrium oxide, hafnium oxide, silicon oxide, magnesium oxide and cerium oxide.

25. Two-part dental implant according to any one of claims 17 to 24, wherein the dental implant (1) and the abutment (12) are connectable to each other with an adhesive.

26. Two-part dental implant according to claim 25, wherein said adhesive is selected from the group consisting of zinc phosphate cement, carboxylate cement, glass ionomer cement, hybrid cement, composite cements, cyanacrylate, and polyacrylate.

27. Two-part dental implant according to any one of claims 17 to 26, wherein said abutment (12) further comprises a crown or superstructure in one piece.

28. Three-part dental implant made of biocompatible ceramics comprising a two-part dental implant according to claims 17 to 27 and a crown or superstructure.

## Patentansprüche

1. Dentalimplantat (1) aus biokompatibler Keramik mit einem äußeren Gewindeteil (2);
einer Kontaktregion (3) zum Kontaktieren eines Abutments (12), einer Längsachse und einer Vertiefung (4a) / oder einem Vorsprung (4b) innerhalb der Kontaktregion (3), die dazu geeignet ist, dass ein Vorsprung (15a) des Abutments (12) in sie eingebracht wird / oder der geeignet ist, in eine Vertiefung (15b) des Abutments (12) eingebracht zu werden, wobei die Kontaktfläche der Vertiefung (4a) / oder des Vorsprungs (4b) mit dem Vorsprung (15a) / oder der Vertiefung (15b) frei von Gewindeteilen ist; und wobei das Gewindeprofil des äußeren Gewindeteils (2) eine apikale Flanke und eine distale Flanke aufweist, wobei der spitze Winkel (β) zwischen der apikalen Flanke und der Längsachse kleiner ist als der spitze Winkel (γ) zwischen der distalen Flanke und der Längsachse,
**dadurch gekennzeichnet, dass** die apikale Flanke einen spitzen Winkel (β) zur Längsachse zwischen 5 und 18 Grad aufweist.

2. Dentalimplantat (1) gemäß Anspruch 1, wobei die Kontaktregion (3) ein Sicherungsmittel (5) aufweist, um eine Rotation eines eingesetzten Abutments (12) zu verhindern;
wobei das Sicherungsmittel (5) ein separates Merkmal zu der Vertiefung (4a) oder dem Vorsprung (4b) innerhalb der Kontaktregion (3) darstellt und einen anderen Durchmesser, eine andere Form und/oder eine andere Länge aufweist als die Vertiefung (4a) oder der Vorsprung (4b).

3. Dentalimplantat (1) gemäß Anspruch 2, wobei das Sicherungsmittel (5) die Form eines in der Kontaktregion (3) befindlichen, mehrseitigen Vorsprungs (6) oder die Form einer in der Kontaktregion (3) befindlichen, mehrseitigen Vertiefung (7) aufweist.

4. Dentalimplantat (1) gemäß einem der Ansprüche 1 bis 3, wobei ein Oberflächenbereich des äußeren Gewindeteils (2) eine Mikrorauhigkeit zwischen 2 Mikron und 50 Mikron aufweist.

5. Dentalimplantat (1) gemäß einem der Ansprüche 1 bis 4, wobei das äußere Gewindeteil (2) einen geeigneten Durchmesser und eine geeignete Länge aufweist, um in den Unterkieferknochen oder Oberkieferknochen eingesetzt zu werden.

6. Dentalimplantat (1) gemäß Anspruch 5, wobei das äußere Gewindeteil (2) eine Länge zwischen 5 und 20 mm und einen Außendurchmesser zwischen 2 und 7 mm aufweist.

7. Dentalimplantat (1) gemäß einem der Ansprüche 1 bis 6, wobei die distale Flanke einen spitzen Winkel (γ) zur Längsachse zwischen 40 und 70 Grad aufweist; und wobei der Unterschied zwischen dem Innendurchmesser (i) und dem Außendurchmesser (o), d.h. die doppelte Gewindetiefe, zwischen 0,1 und 3 mm beträgt.

8. Dentalimplantat (1) gemäß einem der Ansprüche 2 bis 7, wobei das Sicherungsmittel von polygonaler Form (8) ist.

9. Dentalimplantat (1) gemäß Anspruch 8, wobei die polygonale Form (8) 3, 4, 5, 6, 7, 8, 9 oder 10 Seiten hat.

10. Dentalimplantat (1) gemäß einem der Ansprüche 1 bis 9, wobei das Dentalimplantat (1) zusätzlich ein Transgingivalelement (9) in einem Stück aufweist.

11. Dentalimplantat (1) gemäß Anspruch 10, wobei die Kontaktregion (3) auf dem Transgingivalelement (9) des Dentalimplantats (1) lokalisiert ist.

12. Dentalimplantat (1) gemäß einem der Ansprüche 10 oder 11, wobei das Transgingivalelement (9) einen Mittelteil (11) und ein Sicherungsmittel (5) aufweist.

13. Dentalimplantat (1) gemäß einem der Ansprüche 10 bis 12, wobei ein Oberflächenbereich des Transgingivalelements (9) eine Mikrorauhigkeit von weniger als 2 Mikron aufweist.

14. Dentalimplantat (1) gemäß einem der Ansprüche 1 bis 13, wobei der Querschnitt der Vertiefung (4a) / oder des Vorsprungs (4b) in der Kontaktregion (3) ausgewählt ist aus der Gruppe bestehend aus rund, oval und mehrseitig.

15. Dentalimplantat (1) gemäß einem der Ansprüche 1 bis 14, wobei die Vertiefung (4a) / oder der Vorsprung (4b) einen Durchmesser zwischen 0.5 mm und 6 mm und eine Länge zwischen 1 und 19 mm aufweist.

16. Dentalimplantat (1) gemäß einem der Ansprüche 1 bis 15, wobei die biokompatible Keramik ein keramisches Material umfasst, welches aus der Gruppe bestehend aus Zirkonoxid, Aluminiumoxid, Yttriumoxid, Hafniumoxid, Siliziumoxid, Magnesiumoxid und Ceroxid ausgewählt ist.

17. Zweiteiliges Dentalimplantat aus biokompatibler Keramik, umfassend:
ein Dentalimplantat (1) gemäß Ansprüchen 1 bis 16 und
ein Abutment (12) aus biokompatibler Keramik mit einem prothetischen Kopf (13) und einer Kontaktregion (14) mit einem Vorsprung (15a) / oder einer Vertiefung (15b), der geeignet ist, in eine Vertiefung (4a) der Kontaktregion (3) des Dentalimplantats (1) eingebracht zu werden / oder die dazu geeignet ist, dass ein Vorsprung (4b) der Kontaktregion (3) des Dentalimplantats (1) in sie eingebracht wird, wobei der Vorsprung (15a) / oder die Vertiefung (15b) frei von jeglichen Gewindeteilen ist, wobei die Kontaktregion (14) ein Sicherungsmittel (16) aufweist,
das eine Rotation des eingesetzten Dentalimplantats (1) verhindert;
wobei das Sicherungsmittel (16, 17, 18) ein separates Merkmal zu der Vertiefung (15b) oder dem Vorsprung (15a) innerhalb der Kontaktregion (14) darstellt und einen anderen Durchmesser, eine andere Form und/oder eine andere Länge aufweist als die Vertiefung (15b) oder der Vorsprung (15a).

18. Zweiteiliges Dentalimplantat gemäß Anspruch 17, wobei der Querschnitt des Vorsprungs (15a) / oder der Vertiefung (15b) ausgewählt ist aus der Gruppe bestehend aus rund, oval und mehrseitig.

19. Zweiteiliges Dentalimplantat gemäß Ansprüche 17 oder 18, wobei der Vorsprung (15a) / oder die Vertiefung (15b) einen Durchmesser zwischen 0.5 mm und 6 mm und eine Länge zwischen 1 mm und der Länge des zugehörigen Dentalimplantats aufweist.

20. Zweiteiliges Dentalimplantat gemäß einem der Ansprüche 17 bis 19, wobei das Sicherungsmittel (16) in Form eines mehrseitigen Vorsprungs (17) oder einer mehrseitigen Vertiefung (18) in der Kontaktregion (14) vorliegt.

21. Zweiteiliges Dentalimplantat gemäß Anspruch 20, wobei der mehrseitige Vorsprung (17) oder die mehrseitige Vertiefung (18) von polygonaler Form ist.

22. Zweiteiliges Dentalimplantat gemäß Anspruch 21, wobei die polygonale Form 3, 4, 5, 6, 7, 8, 9 oder 10 Seiten hat.

23. Zweiteiliges Dentalimplantat gemäß einem der Ansprüche 17 bis 22, wobei der prothetische Kopf (13) einen Durchmesser zwischen 1 und 5 mm aufweist, welcher über die Länge variieren kann, und eine Länge zwischen 2 und 10 mm aufweist, gemessen von der Kontaktregion (14) bis zur koronalen Region des Abutments.

24. Zweiteiliges Dentalimplantat gemäß einem der Ansprüche 17 bis 23, wobei die biokompatible Keramik ein keramisches Material umfasst, welches aus der Gruppe bestehend aus Zirkonoxid, Aluminiumoxid, Yttriumoxid, Hafniumoxid, Siliziumoxid, Magnesiumoxid und Ceroxid ausgewählt ist.

25. Zweiteiliges Dentalimplantat gemäß einem der Ansprüche 17 bis 24, wobei das Dentalimplantat (1) und das Abutment (12) miteinander mittels eines Klebemittels verbindbar sind.

26. Zweiteiliges Dentalimplantat gemäß Anspruch 25, wobei das Klebemittel aus der Gruppe bestehend aus Zinkphosphatzement, Carboxylatzement, Glasionomerzement, Hybridzement, Kompositzement, Cyanacrylat und Polyacrylat ausgewählt ist.

27. Zweiteiliges Dentalimplantat gemäß einem der Ansprüche 17 bis 26, wobei das Abutment (12) zusätzlich eine Krone oder eine Suprastruktur in einem Stück umfasst.

28. Dreiteiliges Dentalimplantat aus biokompatibler Keramik, das ein zweiteiliges Dentalimplantat gemäß den Ansprüchen 17 bis 27 und eine Krone oder Suprastruktur umfasst.

## Revendications

1. Implant dentaire (1) composé de céramique biocompatible ayant une partie filetée externe (2), une région de contact (3) pour la mise en contact avec une butée (12), un axe longitudinal, et une indentation (4a)/ou une protubérance (4b) dans la région de contact (3) convenant pour l'insertion d'une protubérance (15a)/ou pour l'insertion dans une indentation (15b) de ladite butée (12), tandis que la surface de contact de ladite indentation (4a)/ou protubérance (4b) avec ladite protubérance (15a)/ou indentation (15b) est exempte de parties filetées; et tandis que le profil de filetage de ladite partie à filetage extérieur (2) comprend un flanc apical et un flanc distal, tandis que l'angle aigu (β) entre le flanc apical et l'axe longitudinal est plus faible que l'angle aigu (γ) entre le flanc distal et l'axe longitudinal, **caractérisé en ce que** le flanc apical présente un angle aigu (β) avec l'axe longitudinal se situant entre 5 et 18 degrés.

2. Implant dentaire (1) selon la revendication 1, dans lequel ladite région de contact (3) présente un moyen de retenue (5) pour empêcher la rotation d'une butée engagée (12);
tandis que le moyen de retenue (5) est un élément séparé de l'indentation (4a) ou de la protubérance (4b) dans la région de contact (3), et présente un diamètre, une forme et/ ou une longueur différents de ceux de l'indentation (4a) ou de la protubérance (4b).

3. Implant dentaire (1) selon la revendication 2, dans lequel ledit moyen de retenue (5) est sous la forme d'une protubérance (6) ou d'une indentation (7) présentant des faces multiples, située dans la région de contact (3).

4. Implant dentaire (1) selon l'une quelconque des revendications 1 à 3, dans lequel l'aire de surface de ladite partie filetée externe (2) a une microrugosité entre 2 micromètres et 50 micromètres.

5. Implant dentaire (1) selon l'une quelconque des revendications 1 à 4, dans lequel ladite partie filetée externe (2) a un diamètre et une longueur convenant pour l'insertion dans l'os mandibulaire ou maxillaire.

6. Implant dentaire (1) selon la revendication 5, dans lequel ladite partie filetée externe (2) a une longueur entre 5 et 20 mm et un diamètre externe entre 2 et 7 mm.

7. Implant dentaire (1) selon l'une quelconque des revendications 1 à 6, dans lequel le flanc distal présente un angle aigu (γ) avec l'axe longitudinal d'environ 40 à 70 degrés; et la différence entre le diamètre intérieur (i) et le diamètre extérieur (o), c'est-à-dire la profondeur double du filet, se situe entre 0,1 et 3 mm.

8. Implant dentaire (1) selon l'une quelconque des revendications 2 à 7, dans lequel ledit moyen de retenue est de forme polygonale (8).

9. Implant dentaire (1) selon la revendication 8, dans lequel ladite forme polygonale (8) a 3, 4, 5, 6, 7, 8, 9 ou 10 faces.

10. Implant dentaire (1) selon l'une quelconque des revendications 1 à 9, dans lequel l'implant dentaire (1) comprend en outre une partie transgingivale (9) en une seule pièce.

11. Implant dentaire (1) selon la revendication 10, dans lequel la région de contact (3) est localisée sur la partie transgingivale (9) de l'implant dentaire (1).

12. Implant dentaire (1) selon l'une quelconque des revendications 10 ou 11, dans lequel ladite partie transgingivale (9) a une partie médiane (11) et un moyen de retenue (5).

13. Implant dentaire (1) selon l'une quelconque des revendications 10 à 12, dans lequel une aire de surface de ladite partie transgingivale (9) a une microrugosité inférieure 2 micromètres.

14. Implant dentaire (1) selon l'une quelconque des revendications 1 à 13, dans lequel la section transversale de ladite indentation (4a)/ou protubérance (4b) sur la région de contact (3) est choisie dans le groupe consistant en ronde, ovale et à faces multiples.

15. Implant dentaire (1) selon l'une quelconque des revendications 1 à 14, dans lequel ladite indentation (4a)/ou protubérance (4b) a un diamètre entre 0,5 mm et 6 mm et une longueur entre 1 mm et 19 mm.

16. Implant dentaire (1) selon l'une quelconque des revendications 1 à 15, dans lequel la céramique biocompatible comprend un matériau céramique choisi dans le groupe consistant en oxyde de zirconium, oxyde d'aluminium, oxyde d'yttrium, oxyde de hafnium, oxyde de silicium, oxyde de magnésium, et oxyde de cérium.

17. Implant dentaire en deux parties constitué de céramique biocompatible, comprenant
un implant dentaire (1) selon les revendications 1 à 16, et
une butée (12) constituée de céramique biocompatible, ayant une tête formant prothèse (13) et une région de contact (14) avec une protubérance (15a)/ou une indentation (15b), appropriée pour être insérée dans une indentation (4a)/ou convenant pour l'insertion d'une protubérance (4b) de la région de contact (3) de l'implant dentaire (1), tandis que ladite protubérance (15a)/ou indentation (15b) est exempte de toute partie filetée, tandis que ladite région de contact (14) présente un moyen de retenue (16) empêchant la rotation de l'implant dentaire engagé (1);
tandis que le moyen de retenue (16, 17, 18) est un élément séparé de l'indentation (15b) ou de la protubérance (15a) dans la région de contact (14), et a un diamètre, une forme et/ou une longueur différents de ceux de l'indentation (15b) ou de la protubérance (15a).

18. Implant dentaire en deux parties selon la revendication 17, dans lequel la section transversale de ladite protubérance (15a)/ou
indentation (15b), est choisie dans le groupe consistant en ronde, ovale, et à faces multiples.

19. Implant dentaire en deux parties selon l'une quelconque des revendications 17 ou 18, dans lequel ladite protubérance (15a)/ou indentation (15b) présente un diamètre entre 0,5 mm et 6 mm et une longueur entre 1 mm et la longueur de l'implant dentaire correspondant.

20. Implant dentaire en deux parties selon l'une quelconque des revendications 17 à 19, dans lequel ledit moyen de retenue (16) est sous la forme d'une protubérance (17) ou d'une indentation (18) à faces multiples dans la région de contact (14).

21. Implant dentaire en deux parties selon la revendication 20, dans lequel ladite protubérance (17) ou indentation (18) à faces multiples est de forme polygonale.

22. Implant dentaire en deux parties selon la revendication 21, dans lequel ladite forme polygonale a 3, 4, 5, 6, 7, 8, 9 ou 10 faces.

23. Implant dentaire en deux parties selon l'une quelconque des revendications 17 à 22, dans lequel ladite tête formant prothèse (13) a un diamètre entre 1 et 5 mm, qui peut varier sur la longueur, et une longueur entre 2 et 10 mm mesurée de la région de contact (14) à la région de la couronne de ladite butée.

24. Implant dentaire en deux parties selon l'une quelconque des revendications 17 à 23, dans lequel la céramique biocompatible comprend un matériau céramique choisi dans le groupe consistant en oxyde de zirconium, oxyde d'aluminium, oxyde d'yttrium, oxyde de hafnium, oxyde de silicium, oxyde de magnésium, et oxyde de cérium.

25. Implant dentaire en deux parties selon l'une quelconque des revendications 17 à 24, dans lequel l'implant dentaire (1) et la butée (12) sont aptes à être connectés l'un à l'autre avec un adhésif.

26. Implant dentaire en deux parties selon la revendication 25, dans lequel ledit adhésif est choisi dans le groupe consistant en ciment de phosphate de zinc, ciment de carboxylate, ciment d'ionomère de verre, ciment hybride, ciments composites, cyanoacrylate, et polyacrylate.

27. Implant dentaire en deux parties selon l'une quelconque des revendications 17 à 26, dans lequel ladite butée (12) comprend en outre une couronne ou superstructure en une seule pièce.

28. Implant dentaire en trois parties constitué de céramique biocompatible, comprenant un implant dentaire en deux parties selon les revendications 17 à 27 et une couronne ou superstructure.
